# EUROPEAN PATENT SPECIFICATION

(11) **EP 1 899 599 B1**
(45) Date of publication and mention of the grant of the patent: **11.04.2018**
(21) Application number: 06725963.0
(22) Date of filing: 23.05.2006
(51) Int. Cl.: F02N 9/04, F01L 13/04

(54) **PRESSURE MEDIUM OPERATED STARTING SYSTEM FOR PISTON ENGINE AND METHOD OF STARTING A MULTI CYLINDER PISTON ENGINE**
DRUCKMEDIUMBETÄTIGTES STARTSYSTEM FÜR KOLBENMOTOR UND VERFAHREN ZUM STARTEN EINES MEHRZYLINDERKOLBENMOTORS
SYSTÈME DE DÉMARRAGE ACTIONNÉ PAR AGENT DE PRESSION POUR MOTEUR À PISTON ET PROCÉDÉ DE DÉMARRAGE DE MOTEUR À PISTON POLYCYLINDRIQUE

(30) Priority: 01.07.2005 FI 20055372
(43) Date of publication of application: 19.03.2008
(73) Proprietor: Wärtsilä Finland Oy, 65380 Vaasa (FI)
(72) Inventor: VAARASTO, Matti, FI-64300 Lapväärtti (FI); NUORMALA, Kimmo, FI-65280 Vaasa (FI)
(74) Representative: Berggren Oy, Helsinki & Oulu
(86) International application number: PCT/FI2006/050206
(87) International publication number: WO 2007/003693

(56) References cited:
- CH-A5- 628 958
- DD-A5- 282 492
- DD-A5- 282 492
- GB-A- 2 140 506
- GB-A- 2 140 506
- US-A- 3 587 228
- US-A- 3 587 228
- US-A- 4 226 216

## Description

The invention relates to a pressure medium operated starting system for piston engine in accordance with the preamble of claim 1 and to method of starting a multi cylinder piston engine according to preamble of claim 6.

As known, large multicylinder piston engines are started by supplying e.g. compressed air to the combustion space of the particular cylinder that is at expansion stroke, according to the position of the crankshaft and thus also that of the piston of the engine. Firstly, the problem in these systems is the synchronising of the timing of the engine's gas exchange valves and the timing of the starting gas supply as well as the consumption of starting air related hereto. The aim is to keep the consumption of starting air low, since the storage and production equipment for compressed air takes a lot of space, especially if air is required in large quantities. US 3 587 228 A discloses an air starter valve control system. A purpose of the invention is to provide a pressure medium operated starting system for a multicylinder piston engine, which system minimises the above-mentioned problems related to prior art.

The objects of the invention are primarily achieved as disclosed in the appended claims 1 and 4, and more closely as explained in the other claims. According to the invention, the pressure medium operated starting system for a multicylinder piston engine comprises a pressure medium source and a pipe system, which connects the pressure medium source to each cylinder, and a starting valve in conjunction with each cylinder for controlling the admission of the pressure medium into the cylinder and a control valve for controlling the operation of the starting valve, as well as timing equipment for controlling the operation of control valves, which timing equipment comprises a control part in mechanical connection with the rotating part of the engine. The timing equipment comprises means for changing the opening moment and/or opening period of the starting valve during the start-up. This way the total consumption of the pressure medium may be adjusted to according to the need and thus reduced. The means for changing the opening timing and/or opening period of the starting valve during the start-up is capable of changing the introduction of the pressure medium into the cylinders of the engine in respect of the engine's position.

According to the invention the control part comprises a guide surface at its outer circumference and a plurality of control valves to control, by the effect of said guide surface, the operation of the starting valves, the operating mode of which control valves is dependent on the local radius of the guide surface, and the control part comprises at its outer circumference at least two guide surfaces with shapes differing from one another, and further, the mutual position of the control part and the control valves in the direction of the axis of rotation may be chosen between at least two positions at which the outer circumference has different shapes.

The motion of the control part is enabled by making it movable in the direction of its axis of rotation by means of a power unit. It is also conceivable within the scope of the inventive idea of this embodiment that the control valves are made movable in the direction of the axis of rotation of the control part.

In the method of starting a multicylinder piston engine according to the invention at the initial stage of the starting procedure the pressure medium is introduced in the cylinders of the engine during their expansion stroke, based on the reference of the engine's position and after the engine is cranking at a limit speed the introduction moment and/period is changed so that at least the period of introduction of air is shortened. The limit speed is preferably such that the engine will pass of so-called dead areas in its cycle. This way the opening period of the starting valve may be minimised at speed above the limit speed, which also minimises the consumption of the pressure medium.

In the following, the invention is explained in more detail, by way of example, with reference to the appended schematic drawings, in which
Fig. 1 depicts schematically a compressed air connection for the starting arrangement,
Fig. 2 depicts schematically an engine and a control part for the starting system,
Fig. 3 depicts in more detail a cross-section of the control part according to Fig. 2, and
Fig. 4 depicts schematically another control part for the starting system.

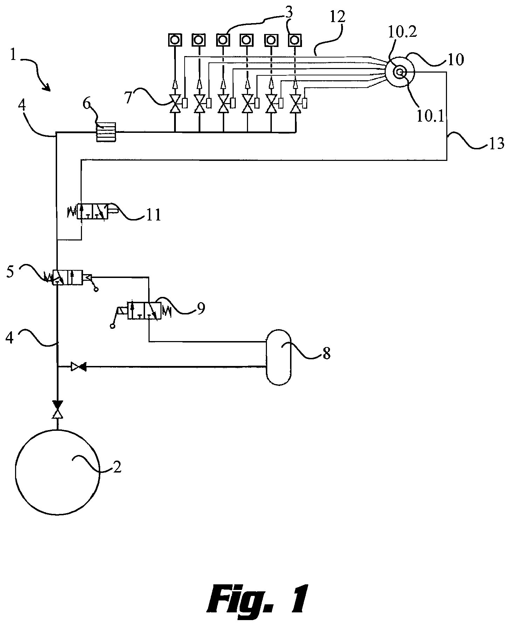

Fig. 1 shows schematically a starting arrangement 1 for an engine. For the start-up it is advantageous to use compressed air. The source 2 of compressed air may be a compressed air network or a compressor (not shown in the figure). Compressed air is led to the cylinders 3 of the engine via a pipe system 4 through a master starting valve 5 and further to each cylinder 3 through a flame arrester 6. The supply of compressed air is controlled by a starting valve 7 in conjunction with each cylinder, the operation of which valve is controlled by timing equipment using control air.

The master starting valve 5 of the system is pneumatically controlled by so-called control air. Control air is received from compressed air storage 8 via an electrically controlled solenoid valve 9. The distribution of compressed air to the cylinders is performed by the timing equipment 10, which controls the valves 7 pneumatically. Compressed air is also led to the timing equipment 10 through a pipe 13. By means of the timing equipment compressed air is supplied to the specific starting valve 7, the opening of which is required in that particular case. The operation is thus synchronised with the work cycle of the engine by means of the timing equipment. From the timing equipment 10 a duct or pipe 12 leads to each starting valve 7, respectively. The pipe system 4 is also provided with a blocking valve 11 for ensuring that the engine cannot be started if, for instance, the engine gear is on. The timing equipment may be coupled mechanically e.g. with the rotating part 15 of the engine, such as the camshaft, whereby it is in direct connection with the rotating part of the engine thereby enabling a timely supply of compressed air to each cylinder.

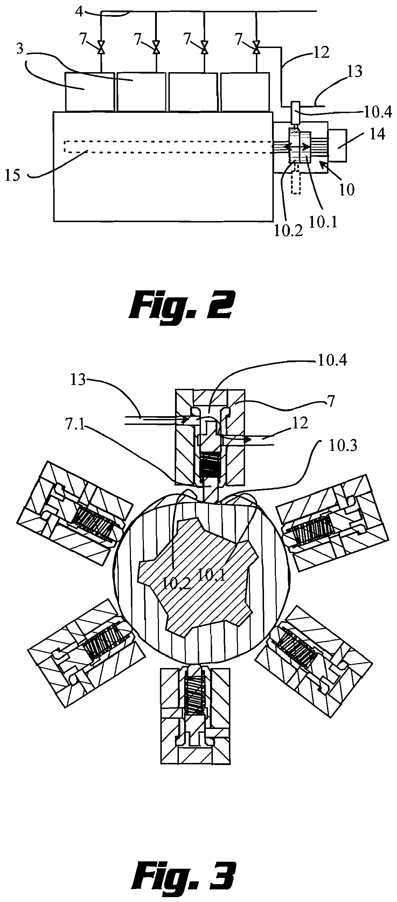

In the embodiment shown in Figs. 2 and 3 the timing equipment 10 comprises a control part, which is provided with a guide surface located at its outer circumference. In the timing equipment according to this embodiment the control part is mostly a cylindrical piece, such as a shaft or a part thereof, and its outer circumference is provided with areas differing from the base circle of the cross-section, e.g. with recesses or protrusions. By the base circle is here meant a form of the cross-section, which correlates with the primary form of the outer surface. There is a plurality of control valves 10.4 in conjunction with the control part, which valves are controlled by the form of the guide surface, while the control part is in rotation. The guide surface comprises, in the direction of its longitudinal axis, at least two separate guiding areas 10.1, 10.2, the forms, i.e. profiles, of which differ from one another. This is shown more specifically in Fig. 2. The control part is here made movable in the direction of its axis of rotation, which is shown by an arrow. Consequently, it is possible to control the starting process of the engine during the process so that it has two different operating modes. The first operating mode during the initial stage of the starting procedure is such that it is possible to make the engine rotate in any position. Then the shape of the guide surface to be used is such that the control valve stays open for a relatively long time. The initial rotation of the engine requires a relatively long opening range for the valves 7 in order to make the start-up possible in any position of the engine. This depends naturally on the timing of the engine's gas exchange valves. After the engine is made, by the effect of the first operating mode, to rotate at a sufficiently high speed enabling the passing of so-called dead areas, if any, without stopping the engine, it is possible to move over to the second operating mode and start using the second guiding area 10.2. This speed is called here as the limit speed. This is accomplished by a power unit 14. By means of the power unit the position of the control part may be moved in the direction of the axis of rotation. In the second operating mode the opening time of the control valve is shorter and the opening moment may be different, preferably earlier, from that of the first operating mode so that the rotational speed of the engine may be increased without increasing the consumption of starting air.

Fig. 3 shows schematically a cross-section of the control part and the control valves. In this case the control valve 7 opens, when its spindle 7.1 moves, determined by the guide surface, towards the axis of rotation of the control part and opens through itself a gas flow path between the pipes 12 and 13.

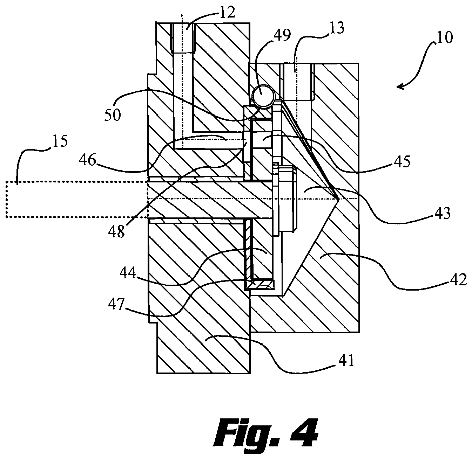

Fig. 4 depicts another embodiment of the timing equipment 10 for the control valves. This one is also in mechanical connection with the camshaft 15 of the engine or makes an extension thereof. The timing equipment according to this embodiment comprises a body part 41 and a cover part 42 as well as a gas space 43 between these two. A pipe 13 is arranged so that it opens to the gas space for supplying air for the control equipment. The equipment comprises a disc 44 connected to the rotation of the engine and provided with radially distributed (not shown) holes 45. The body part 41 is provided with ducts 46, through which the pipe 13 may be in flow connection with pipes 12 and thus with the starting valve 7 of each cylinder. It is primarily the holes 45 in the disc that determine when and for how long air will pass from the gas space 43 through the duct 46 further to the starting valve 7. The timing equipment comprises further an intermediate plate 47 in conjunction and parallel with the disc 44, which plate is also rotatable relative to the axis of rotation of the disc 44. Also the intermediate plate is provided with holes 48 approximately at the same distance from the axis of rotation as the holes 45 in the disc 44. In conjunction with the intermediate plate there are also members 49, 50 for the rotation thereof, which members in this case comprise a threaded rod with actuator 49, and a thread 50 at the outer circumference of the intermediate plate. In practise, the rotation of the intermediate plate is accomplished by rotating it suitably so that its holes take a desired position with respect to the ducts 46 of the body part. An airflow connection between the pipes 12 and 13 to the starting valve is established, when the ducts of the disc 44 and the intermediate plate 47 and the body part coincide. The combined effects of the disc 44 and the intermediate plate 47 provide the control valve according to this embodiment. By changing the position of the holes in the intermediate plate with respect to the ducts 46 it is possible to affect the timing of the start of the control air supply. The control of the timing of the starting air supply according to the solution of this embodiment also corresponds to the operation shown in conjunction with Figs. 2 and 3. The shape of the holes in the intermediate plate may differ from a circle and be for instance a radially elongated hole. Moreover, two separate intermediate plates may be used in addition to one in order to improve adjustability.

The invention is not limited to the shown embodiments, but several variations are conceivable within the scope of the appended claims.

## Claims

1. A pressure medium operated starting system (1) for a multicylinder piston engine comprising a pressure medium source (2) and a pipe system (4), which connects the pressure medium source to each cylinder (3), and a starting valve (7) in conjunction with each cylinder for controlling the admission of the pressure medium into the cylinder and a control valve for controlling the operation of the starting valve, as well as timing equipment (10) for controlling the operation of control valves, which timing equipment comprises a control part in mechanical connection with a rotating part (15) of the engine and means (10.1, 10.2, 14; 47, 49) for changing the opening moment and/or opening period of the starting valve during the start-up, **characterised in that** the control part comprises a guide surface (10.1, 10.2) at its outer circumference and a plurality of control valves (10.4) to control, by the effect of said guide surface, the operation of the starting valves (7), the operating mode of which control valves is dependent on the local radius of the guide surface, and that the control part comprises at its outer circumference at least two guide surfaces (10.1, 10.2) with shapes differing from one another, and that the mutual position of the control part and the control valves in the direction of the axis of rotation may be chosen between at least two positions.

2. A starting system (1) according to claim 1, **characterised in that** the control part is made movable in the direction of its axis of rotation by means of a power unit (14).

3. A starting system (1) according to claim 1, **characterised in that** the control valves (10.4) are made movable in the direction of the axis of rotation of the control part.

4. Method of starting a multicylinder piston engine in which at the initial stage of the starting procedure the pressure medium (2) is introduced in the cylinders (3) of the engine during their expansion stroke, based on the reference of the engine's position, **characterised in that** after the engine is cranking at a limit speed the introduction moment and/or period is changed so that at least the period of introduction of air is shortened.

## Patentansprüche

1. Druckmittelbetätigte Anlassanlage (1) für einen Mehrzylinderkolbenmotor, die eine Druckmittelquelle (2) und ein Leitungssystem (4), das die Druckmittelquelle mit jedem Zylinder (3) verbindet, und ein Starventil (7) in Verbindung mit jedem der Zylinder zum Steuern des Zuführens des Druckmittels in den Zylinder und ein Steuerventil zum Steuern des Betriebs des Startventils, als auch ein Zeitmessgerät (10) zum Steuern des Betriebs des Steuerventils aufweist, wobei das Zeitmessgerät einen Steuerteil in mechanischer Verbindung mit einem Rotationsteil (15) des Motors und Mittel (10.1, 10.2, 14; 47,49) zum Ändern des Öffnungszeitpunkts und/oder der Öffnungsdauer des Startventils während des Anlassens aufweist, **dadurch gekennzeichnet, dass** der Steuerteil eine Leitfläche (10.1, 10.2) an seinem Außenumfang und eine Vielzahl an Steuerventilen (10.4) aufweist, um durch die Wirkung der Leitfläche den Betrieb der Startventile (7), den Betriebsmodus, bei dem die Steuerventile von dem lokalen Radius der Leitfläche abhängig sind, zu steuern, und dass der Steuerteil an seinem Außenumfang mindestens zwei Leitflächen (10.1, 10.2) aufweist, die sich in ihrer Form voneinander unterscheiden, und dass die gegenseitige Position des Steuerteils und der Steuerventile in der Richtung der Drehachse zwischen zwei Position ausgewählt werden kann.

2. Anlassanlage (1) nach Anspruch 1, **dadurch gekennzeichnet, dass** der Steuerteil in Richtung seiner Drehachse mittels einer Leistungseinheit (14) beweglich gestaltet ist.

3. Anlassanlage (1) nach Anspruch 1, **dadurch gekennzeichnet, dass** die Steuerventile (10.4) in Richtung der Drehachse des Steuerteils beweglich gestaltet sind.

4. Verfahren zum Anlassen eines Mehrzylinderkolbenmotors, bei dem in der Anfangsphase des Anlassvorgangs das Druckmittel (2) den Zylindern (3) des Motors während eines Expansionstaktes zugeführt wird, basierend auf der Referenz der Motorposition, **dadurch gekennzeichnet, dass** bei Drehen des Motors mit einer Grenzdrehzahl der Zuführzeitpunkt und/oder die Zuführdauer derart geändert wird, dass die Zuführdauer von Luft verkürzt wird.

## Revendications

1. Système de démarrage actionné par agent de pression (1) pour moteur à piston à cylindres multiples, comprenant une source d'agent de pression (2) et un système de conduites (4) qui connecte la source de moyen de pression à chaque cylindre (3), et une vanne de démarrage (7) en conjonction avec chaque cylindre pour contrôler l'admission de l'agent de pression dans le cylindre et une vanne de commande pour contrôler le fonctionnement de la vanne de démarrage, de même qu'un équipement de temporisation (10) pour contrôler le fonctionnement des vannes de commande, lequel équipement de temporisation comprend une pièce de commande en connexion mécanique avec une pièce rotative (15) du moteur et un moyen (10.1, 10.2, 14; 47, 49) de changement du moment d'ouverture et/ou de la période d'ouverture de la vanne de démarrage pendant le démarrage, **caractérisé en ce que** la pièce de commande comprend une surface de guidage (10.1, 10.2) au niveau de sa circonférence extérieure et une pluralité de vannes de commande (10.4) pour contrôler, par l'effet de ladite surface de guidage, le fonctionnement des vannes de démarrage (7), le mode de fonctionnement desquelles vannes de commande dépendant du rayon local de la surface de guidage, et que la pièce de commande comprend au niveau de sa conférence extérieure au moins deux surfaces de guidage (10.1, 10.2) dont les formes diffèrent l'une de l'autre, et que la position mutuelle de la pièce de commande et des vannes de commande dans le sens de l'axe de rotation peut être choisie entre au moins deux positions.

2. Système de démarrage (1) selon la revendication 1, **caractérisé en ce que** la pièce de commande est rendue mobile dans le sens de son axe de rotation au moyen d'une unité électrique (14).

3. Système de démarrage (1) selon la revendication 1, **caractérisé en ce que** les vannes de commande (10.4) sont rendues mobiles dans le sens de l'axe de rotation de la pièce de commande.

4. Procédé de démarrage d'un moteur à piston à cylindres multiples, dans lequel, au stade initial de la procédure de démarrage, l'agent de pression (2) est introduit dans les cylindres (3) du moteur pendant leurs courses d'expansion en se basant sur la référence de la position du moteur, **caractérisé en ce que**, après le démarrage du moteur à une vitesse limite, le moment et/ou la période d'introduction est modifié de manière à ce qu'au moins la période d'introduction d'air soit raccourcie.
